Europäisches Patentamt

European Patent Office

Office européen des brevets

(19)

(11) Veröffentlichungsnummer: **0 203 350 B1**

# EUROPÄISCHE PATENTSCHRIFT

(12)

(45) Veröffentlichungstag der Patentschrift: **03.06.92**

(51) Int. Cl.⁵: **G01K 7/24**, G01D 3/02

(21) Anmeldenummer: **86105399.9**

(22) Anmeldetag: **18.04.86**

(54) **Temperaturmessvorrichtung zur Erfassung grosser Temperaturschwankungen.**

(30) Priorität: **25.04.85 DE 3514862**

(43) Veröffentlichungstag der Anmeldung:
**03.12.86 Patentblatt 86/49**

(45) Bekanntmachung des Hinweises auf die
Patenterteilung:
**03.06.92 Patentblatt 92/23**

(84) Benannte Vertragsstaaten:
**AT DE FR GB IT NL**

(56) Entgegenhaltungen:
**EP-A- 0 108 325**

**PATENT ABSTRACTS OF JAPAN, Band 6, Nr.
13 (P-99)[891], 26. Januar 1982;& JP-A-56 137
120**

(73) Patentinhaber: **Klöckner-Humboldt-Deutz AG
Otto Strasse 1
W-5000 Köln 90(DE)**

(72) Erfinder: **Wallenfang, Gerd
Reineke-Strasse 23
W-5000 Köln 90(DE)**

EP 0 203 350 B1

## Beschreibung

Die Erfindung betrifft eine Temperaturmeßvorrichtung zur Erfassung großer Temperaturschwankungen, insbesondere zur Erfassung von Temperaturen an einer Brennkraftmaschine gemäß Oberbegriff des Anspruchs 1.

Es ist bekannt (EP-A-0 0 108 325), zur Erfassung von Temperaturen temperaturabhängige Widerstände wie NTC-Widerstände einzusetzen. Ein derartiger Widerstand wird über einen Vorwiderstand an eine konstante Spannungsquelle angeschlossen, wobei der Spannungsabfall am temperaturabhängigen Widerstand ein Maß für die erfaßte Temperatur bzw. Temperaturänderung ist.

Temperaturabhängige Widerstände ändern ihren Wert in der Größenordnungen von Zehnerpotenzen. So ändert ein NTC-Widerstand in einem Temperaturbereich von - 60° C bis + 200° C seinen Wert von 160 KOhm auf 20 Ohm (8000 : 1).

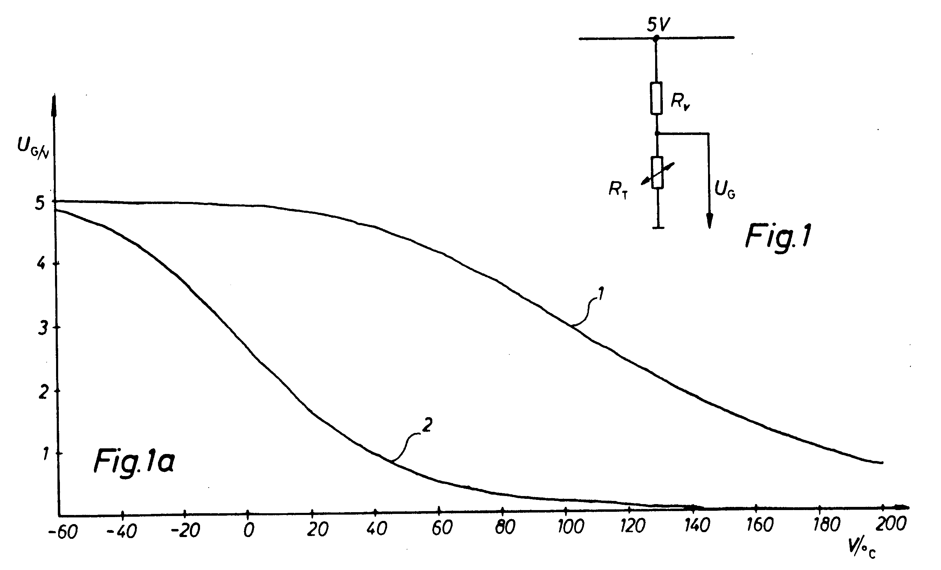

Um bei hohen Temperaturen eine ausreichende Meßgenauigkeit zu erzielen, muß ein niederohmiger Vorwiderstand verwendet werden. Wie aus der Kurve 1 in Fig. 1a zu ersehen, ist die Spannungsänderung bei niederohmigen Vorwiderstand im Bereich von - 60° C bis 0° C fast Null, während bei hohen Temperaturen ausreichende Spannungsänderungen vorliegen, die eine entsprechend genaue Temperaturerfassung ermöglichen.

Wird zum Erfassen tiefer Temperaturen ein hochohmiger Vorwiderstand eingesetzt, ergibt sich die Kurve 2 in Fig. 1a, die im Bereich hoher Temperaturen relativ flach verläuft, so daß in diesem Bereich eine genaue Temperaturerfassung nicht möglich ist.

Beim praktischen Einsatz ergeben sich ferner Schwierigkeiten, Störungen wie Leitungsbruch oder Kurzschluß zu erkennen. Bei einem niederohmigen Vorwiderstand kann in niedrigen Temperaturbereichen eine Unterbrechung der Leitung zum NTC-Widerstand nicht erkannt werden, während bei einem hochohmigen Widerstand in hohen Temperaturbereichen ein Kurzschluß des NTC-Widerstandes nicht erkannt werden kann.

Der Erfindung liegt die Aufgabe zugrunde, eine Temperaturmeßvorrichtung nach dem Oberbegriff des Anspruchs 1 derart weiterzubilden, daß bei sicherer Erkennung eines Bruchs bzw. Kurzschlusses der elektrischer Zuleitungen sowohl bei niedrigen wie bei hohen Temperaturen ein ausreichendes Ausgangssignal zur Verfügung steht.

Diese Aufgabe wird durch die kennzeichnenden Merkmale des Anspruchs 1 gelöst.

Die mit fest vorgegebener Frequenz erfolgte Umschaltung des Vorwiderstandes von hochohmig auf niederohmig erzeugt ein Ausgangssignal der Temperaturmeßvorrichtung, das in einem Temperaturpunkt entsprechend der Frequenz von der niederohmigen Kurve (Kurve 1 in Fig. 1a) auf die hochohmige Kurve (Kurve 2 in Fig. 1a) springt. Auf diese Weise wird mit einer Temperaturmeßvorrichtung sowohl bei hohen wie bei tiefen Temperaturen ein Ausgangssignal zur Verfügung gestellt, das sich auch bei kleinen Temperaturänderungen in seiner Amplitude erkennbar ändert. Das Ausgangssignal gibt - entsprechend aufbereitet - beide Kurven wieder. Bei einem Ausbleiben des in ihrer Amplitude sich sprunghaft ändernden Ausgangssignals kann ein Bruch oder Kurzschluß der elektrischen Zuleitungen oder ein Ausfall des temperaturabhängigen Widerstandes erkannt werden.

Durch die erfindungsgemäße Umschaltung zwischen einem hochohmigen und einem niederohmigen Vorwiderstand ist der durch den temperaturabhängigen Widerstand fließende Strom im Mittelwert geringer als bei andauerndem Betrieb mit einem niederohmigen Vorwiderstand. Die Eigenerwärmung des temperaturabhängigen Widerstands ist bei der erfindungsgemäßen Temperaturmeßvorrichtung somit geringer; wird ein höherer Strom durch den temperaturabhängigen Widerstand der erfindungsgemäßen Temperaturmeßvorrichtung eingestellt, so wird bei größerem Ausgangssignal der temperaturabhängige Widerstand nicht stärker erwärmt als bei einer bekannten Ausführung mit dem niederohmigen Vorwiderstand.

Die erfindungsgemäße Temperaturmeßvorrichtung weist vorteilhaft einen Vorwiderstand auf, der aus einer Parallelschaltung aus einem hochohmigen und einem niederohmigen Vorwiderstand gebildet ist. Im Zweig des niederohmigen Vorwiderstandes ist ein mit vorgegebener Frequenz ein- und ausschaltbarer Schalter angeordnet, so daß der Gesamtvorwiderstand zwischen einem hochohmigen Wert - der durch den hochohmigen Widerstand der Parallelschaltung - bestimmt ist und einem niederohmigen Wert - der durch die Parallelschaltung des hoch- und niederohmigen Widerstandes bestimmt ist - mit fester Frequenz umgeschaltet wird.

In einfacher Ausgestaltung wird die am temperaturabhängigen Widerstand abfallende Spannung über einen Tiefpaß abgegriffen, so daß am Ausgang des Tiefpasses ein aufbereitetes Ausgangssignal zur Verfügung steht, das über den gesamten Temperaturbereich eine ausreichend große Änderung der Spannung aufweist.

In vorteilhafter Weiterbildung der Erfindung ist die am temperaturabhängigen Widerstand abfallende Spannung sowie der Schaltzustand (Schaltfrequenz) des Schalters einem Rechner zugeführt, wobei das Ausgangssignal der Temperaturmeßvorrichtung und die Frequenz des Schalters synchron sind. Mittels des Rechners kann sowohl eine Kurve mit hochohmigen Vorwiderstand Wie eine Kurve mit niederohmigem Vorwiderstand abwechselnd erfaßt werden sowie die Summe dieser Kurven durch Mittelwertbildung bestimmt werden.

Der Schalter ist vorteilhaft ein Transistor, der mit einer Frequenz mit einem Tastverhältnis von 1 : 1 als Schalter betrieben wird.

Bei weiteren Versuchen hat es sich herausgestellt, daß in manchen Anwendungsfällen eine im Bereich von tiefen und sehr hohen an den temperaturabhängigen Widerstand anliegenden Temperaturen die Spannungsänderung des Ausgangssignals über der Temperatur noch ausgeprägter - also steiler - verlaufen sollte.

In vorteilhafter Weiterbildung der Erfindung hat die Frequenz, die den als Schalter betriebenen Transistor ansteuert, ein variables, steuerbares Tastverhältnis.

Dabei wird die Frequenz, erfindungsgemäß so gewählt, daß bei niedriger Ausgangsspannung - also bei sehr hohen an dem temperaturabhängigen Widerstand anliegenden Temperaturen - die niederohmige Kurve (Kurve 1 in Fig. 1a) lange Zeit eingeschaltet ist und die hochohmige Kurve (Kurve 2 in Fig. 1a) kurze Zeit angeschaltet ist. Entsprechend wird bei hoher Ausgangsspannung - also bei niedrigen an dem temperaturabhängigen Widerstand anliegenden Temperaturen - die hochohmige Kurve lange Zeit und die niederohmige Kurve kurze Zeit angeschaltet. Die Mittelwertkurve geht dadurch bei hohen Temperaturen in die niederohmige Kurve und bei niedrigen Temperaturen in die hochohmige Kurve über. Somit wird an den beiden Enden des Meßbereichs eine gegenüber der angesteuerten Version deutlich größere Steigung des Ausgangsspannungssignals erreicht.

In einfacher Ausgestaltung wird den Tiefpaß ein Komparator nachgeschaltet, der die entsprechenden Umschaltungen steuert.

Auf einem ersten Eingang des Komparators wird erfindungsgemäß das Ausgangssignal des Tiefpasses aufgeschaltet und auf einen zweiten Eingang des Komparators wird eine Dreiecksspannung aufgeschaltet. Das Ausgangssignal des Komparators wird einmal als gesamtes Ausgangssignal der Temperaturmeßvorrichtung abgegriffen und parallel dazu wird das Ausgangssignal des Komparators über einen Vorwiderstand dem als Schalter eingesetzten Transistor zugeführt. Dadurch, daß die dem Komparator auf dessen ersten Eingang zugeführte Spannung in Abhängigkeit der von dem temperaturabhängigen Widerstand erfaßten Temperaturen zwischen niedrigen und hohen Werten entsprechend den jeweils erfaßten Temperaturen schwankt, auf dem zweiten Eingang des Komparators aber eine mit konstanter Frequenz an- bzw. abschwellende Spannung anliegt, ändert sich die Frequenz des Gesamtausgangssignals in der gewünschten Weise.

Die Spannungswerte, die auf den zweiten Eingang des Komparators aufgeschaltet sind, schwingen vorteilhaft zwischen zwei vorgegebenen Spannungswerten. Dabei ist die Gesamtspannungsamplitude je nach Erfordernissen bzw. je nach Typ des Komparators insgesamt positiv oder negativ.

Weitere Merkmale der Erfindung ergeben sich aus der folgenden Beschreibung sowie den in den Zeichnungen dargestellten Ausführungsbeispielen.

Es zeigen:

Fig. 1      eine Temperaturmeßvorrichtung gemäß dem Stand der Technik,

Fig. 1a     über der Temperatur aufgezeichnetes Ausgangssignal der bekannten Temperaturmeßvorrichtung mit hochohmigen und mit niederohmigen Vorwiderstand,

Fig. 2      eine Temperaturmeßvorrichtung gemäß der Erfindung,

Fig. 2a     über der Temperatur aufgetragenes, aufbereitetes Ausgangssignal der erfindungsgemäßen Temperaturmeßvorrichtung,

Fig. 3      eine Temperaturmeßvorrichtung gemäß einer Weiterbildung der Erfindung,

Fig. 3a     über der Temperatur aufgetragenes, aufbereitetes Ausgangssignal der erfindungsgemäßen Weiterbildung der Temperaturmeßvorrichtung.

Bei der bekannten Temperaturmeßvorrichtung wird der temperaturabhängige Widerstand RT über einen Vorwiderstand $R_V$ an eine Konstantspannungsquelle von z.B. 5 Volt gelegt. Die am temperaturabhängigen Widerstand RT abfallende Spannung $U_G$ ist das Ausgangssignal der Temperaturmeßvorrichtung.

Bei einem niederohmigen Vorwiderstand RV von z.B. 120 Ohm ändert sich das Ausgangssignal $U_G$ gemäß Kurve 1.

Bei einem hochohmigem Vorwiderstand $R_V$ von z.B. 4,7 KOhm ändert sich das Ausgangssignal über der Temperatur gemäß Kurve 2.

Wird ein hochohmiger Vorwiderstand benutzt, ändert sich das Ausgangssignal ab etwa 100° C bei Temperaturschwankungen von ± 20° C relativ schwach, so daß eine fehlerfreie, genaue Temperaturerfassung nicht möglich ist. Bei einem niederohmigen Vorwiderstand ist aufgrund desselben Sachverhalts eine genaue Temperaturerfassung im Bereich von - 60° C bis + 20° C kaum möglich.

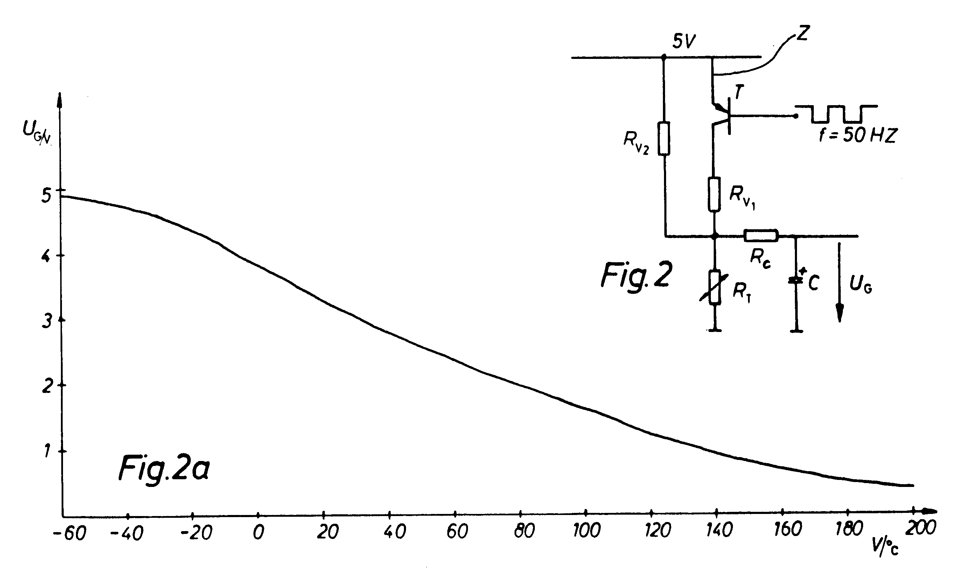

Die in Fig. 2 dargestellte erfindungsgemäße Temperaturmeßvorrichtung besteht aus einem temperaturabhängigen Widerstand $R_T$, der über eine Parallelschaltung aus einem hochohmigen Vorwiderstand $R_{V2}$ und einem niederohmigen Vorwiderstand $R_{V1}$ an eine Konstantspannungsquelle von 5 Volt gelegt ist. Der hochohmige Widerstand hat z.B. einen Wert von 4,7 KOhm, der niederohmige

Widerstand $R_{V1}$ einenWert von 120 Ohm. Im Zweig Z des niederohmigen Vorwiderstandes $R_{V1}$ ist ein Transistor T als Unterbrecher angeordnet. Die Basis des Schalttransistors T wird mit einer Tastfrequenz von z.B. f = 50 Hertz beaufschlagt. Das Tastverhältnis der Tastfrequenz ist vorteilhaft 1 : 1.

Bei unterbrochenem niederohmigen Zweig ist der Vorwiderstand der Parallelschaltung durch $R_{V2}$ zu 4,7 KOhm bestimmt.

Bei leitendem niederohmigem Zweig ist der Wert des Vorwiderstandes zu

$$R_V = \frac{R_{V1} \cdot R_{V2}}{R_{V1} + R_{V2}}$$

bestimmt und errechnet sich zu etwa 117 Ohm. Der niederohmige Widerstand der Parallelschaltung ist somit weitgehend durch den niederohmigen Vorwiderstand $R_{V1}$ = 120 Ohm bestimmt.

Die am temperaturabhängigen Widerstand $R_T$ abfallende Spannung wird über einen Tiefpaß aus einem Widerstand $R_C$ und einem Kondensator C abgegriffen Die Reihenschaltung aus dem Widerstand $R_C$ und dem Kondensator C liegt parallel zum temperaturabhängigen Widerstand $R_T$. Die am Kondensator C abgegriffene Spannung $U_G$ entspricht dem aufbereiteten Ausgangssignal der erfindungsgemäßen Temperaturmeßvorrichtung und ist in Fig. 2a über der Temperatur dargestellt. Wie aus Fig. 2a deutlich zu ersehen, ändert sich das Ausgangssignal sowohl bei niedrigen wie bei hohen Temperaturen deutlich, so daß aus den Änderungen des Ausgangssignals - in allen Punkten eines Temperaturbereichs von - 60° C bis 200° C - sicher und mit hoher Genauigkeit auf die erfaßte Temperatur geschlossen werden kann. Aufgrund des mit fester Frequenz umgeschalteten Vorwiderstandes ist die Eigenerwärmung des temperaturabhängigen Widerstandes geringer als die bei einer Ausführung nach Fig. 1.

Es kann auch vorteilhaft sein, einen Schalter in der erfindungsgemäßen Temperaturmeßvorrichtung derart vorzusehen, daß in Abhängigkeit von einer Schaltfrequenz der temperaturabhängige Widerstand abwechselnd über den hochohmigen Widerstand $R_{V2}$ und den niederohmigen Widerstand $R_{V1}$ an die Konstantspannungsquelle gelegt wird.

Die am temperaturabhängigen Widerstand $R_T$ abfallende Spannung kann vorteilhaft zusammen mit der dem Transistor T zugeführten Tastfrequenz ein Rechner zugeführt sein. Der Rechner wird durch die Tastfrequenz des Transistors T synchronisiert und ordnet das empfangene Ausgangssignal jeweils der Kurve 1 gemäß Fig. 1a oder der Kurve 2 gemäß Fig. 1a zu und kann darüberhinaus die Kurve gemäß Fig. 2a durch Mittelwertbildung zusammensetzen. Ferner kann der Rechner aufgrund des bei intakten Bauteilen sich entsprechend der Tastfrequenz sprunghaft ändernden Ausgangssignals auch einen Bruch elektrischer Leitungen oder einen Ausfall des temperaturabhängigen Widerstandes $R_T$ erkennen.

Es kann zweckmäßig sein, die Konstantspannungsquelle sowie die zwischen NTC-Widerstand $R_T$ und Spannungsquelle liegenden Vorwiderstand $R_{V1}$ und $R_{V2}$ durch Konstantstromquellen mit entsprechenden Werten zu ersetzen. Die Konstantstromquellen werden - entsprechend einer Schaltfrequenz - abwechselnd mit dem NTC-Widerstand $R_T$ verbunden.

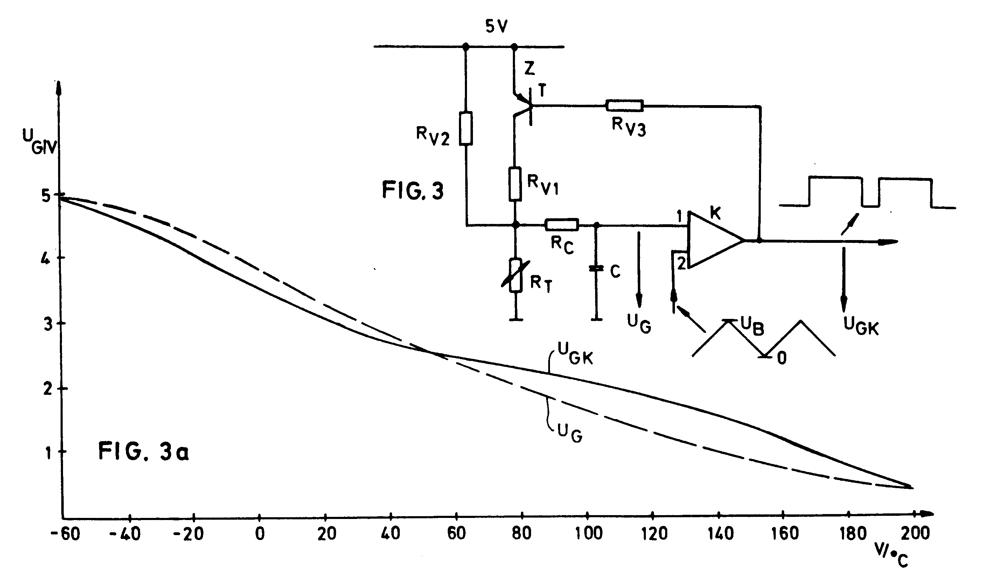

Eine Schaltung für eine variable, steuerbare Schaltfrequenz für den Transistor T ist in Fig. 3 dargestellt. Die das Ausgangssignal der Fig. 2 darstellende Spannung $U_G$ wird auf einen ersten Eingang 1 eines Komparators K geschaltet, während auf einen zweiten Eingang 2 des Komparators K eine Dreiecksspannung aufgeschaltet ist. Die Dreiecksspannung schwingt zwischen Spannungswerten Null und $U_B$, wobei die Steigung des Absolutwertes der Spannungsänderung über der Zeit bzw. Frequenz konstant ist.

Die Ausgangsspannung $U_{GK}$ des Komparators K stellt einmal das Gesamtausgangssignal der Temperaturmeßeinrichtung dar, und steuert zum anderen über einen Vorwiderstand $R_{V3}$ den Transistor T an. Das ganze System bildet somit einen geschlossenen Regelkreis.

In der Fig. 3 a ist die Ausgangsspannung $U_{GK}$ als Funktion der an dem NTC-Widerstand herrschenden Temperatur dargestellt. Zum Vergleich ist als unterbrochene Kurve die Ausgangsspannung $U_G$ ebenfalls aufgetragen. Bei dem Vergleich der beiden Kurven ist deutlich die sich durch die gesteuerte Schaltfrequenz größere Steigung der Kurve $U_{GK}$ bei hohen und bei niedrigen Temperaturen gegenüber der Kurve $U_G$ zu erkennen.

**Patentansprüche**

1. Temperaturmeßvorrichtung zur Erfassung großer Temperaturschwankungen, insbesondere zur Erfassung von Temperaturen an einer Brennkraftmaschine, bestehend aus einem temperaturabhängigen Widerstand ($R_T$), der über einen Vorwiderstand ($R_V$) mit einer Spannungsquelle verbunden ist, wobei der am temperaturabhängigen Widerstand ($R_T$) gemessene Spannungsabfall ($U_G$) ein Maß für die Temperatur ist,
dadurch gekennzeichnet, daß der Vorwiderstand ($R_V$) mit vorgegebener Frequenz zwischen einem niederohmigen und einem hochohmigen Wert umschaltbar ist.

**2.** Temperaturmeßvorrichtung nach Anspruch 1, dadurch gekennzeichnet, daß anstelle des Vorwiderstandes ($R_V$) in Reihe zum temperaturabhängigen Widerstand ($R_T$) eine Parallelschaltung aus einem hochohmigen und einem niederohmigen Vorwiderstand ($R_{V2}$, $R_{V1}$) geschaltet ist und im Zeig (Z) des niederohmigen Vorwiderstandes ($R_{V1}$) ein mit vorgegebener Frequenz ein- und ausschaltbarer Schalter (T) angeordnet ist.

**3.** Temperaturmeßvorrichtung nach Anspruch 2, dadurch gekennzeichnet, daß der Schalter ein Transistor (T) ist.

**4.** Temperaturmeßvorrichtung nach einem der Ansprüche 1 bis 3, dadurch gekennzeichnet, daß die am temperaturabhängigen Widerstand ($R_T$) abfallende Spannung ($U_G$) über einen Tiefpaß ($R_C$, C) abgegriffen ist.

**5.** Temperaturmeßvorrichtung nach einem der Ansprüche 1 bis 4, dadurch gekennzeichnet, daß die am temperaturabhängigen Widerstand ($R_T$) abfallende Spannung sowie die Frequenz des Schalters (T) einem Rechner zugeführt ist.

**6.** Temperaturmeßvorrichtung nach einem der Ansprüche 1 bis 5, dadurch gekennzeichnet, daß die Frequenz das Tastverhältnis 1 hat.

**7.** Temperaturmeßvorrichtung nach einem der Ansprüche 1 bis 5, dadurch gekennzeichnet, daß die Frequenz ein variables, steuerbares Tastverhältnis hat.

**8.** Temperaturmeßvorrichtung nach einem der Ansprüche 1 bis 5 und 7, dadurch gekennzeichnet, daß das Tastverhältnis in Abhängigkeit von der Spannung ($U_G$) änderbar ist.

**9.** Temperaturmeßvorrichtung nach einem der Ansprüche 1 bis 5 und 7 und 8, dadurch gekennzeichnet, daß dem Tiefpaß ($R_C$, C) ein Komparator (K) nachgeschaltet ist.

**10.** Temperaturmeßvorrichtung nach Anspruch 9, dadurch gekennzeichnet, daß an einem ersten Eingang (1) des Komparators (K) die Spannung ($U_G$) anliegt und an einem zweiten Eingang (2) des Komparators (K) eine Dreiecksspannung anliegt und daß das Ausgangssignal des Komparators (K) die Ausgangsspannung ($U_{GK}$) der Temperaturmeßvorrichtung bildet, die gleichzeitig über einen Vorwiderstand ($R_{V3}$) den als Schalter eingesetzten Transistor (T) ansteuert.

**11.** Temperaturmeßvorrichtung nach Anspruch 10, dadurch gekennzeichnet, daß die Dreiecksspannung zwischen den Spannungswerten O und $U_B$ schwingt.

## Claims

**1.** A temperature-measuring device for the detection of great temperature fluctuations, especially for the detection of temperatures in an internal combustion engine, comprising a temperature-dependent resistor ($R_T$) which is connected by way of a series resistor ($R_V$) with a voltage source, the temperature drop ($U_G$) measured on the temperature-dependent resistor ($R_T$ being a measure for the temperature, characterised in that the series resistor ($R_V$) can be switched over with pre-determined frequency between a low-ohmic and a high-ohmic value.

**2.** A temperature-measuring device according to Claim 1, characterised in that,in place of the series resistor ($R_V$),a parallel connection of a high-ohmic and a low-ohmic series resistor ($R_{V2}$, $R_{V1}$) is connected in series with the temperature-dependent resistor ($R_T$) and in the branch (Z) of the low-ohmic series resistor ($R_{V1}$) there is arranged a switch (T) which can be switched on and off with predetermined frequency.

**3.** A temperature-measuring device according to Claim 2, characterised in that the switch is a transistor (T).

**4.** A temperature-measuring device according to any one of Claims 1 to 3, characterised in that the voltage ($U_G$) falling on the temperature-dependant resistor ($R_T$) is tapped by way of a low-pass filter $R_C$, C).

**5.** A temperature-measuring device according to any one of Claims 1 to 4, characterised in that the voltage falling on the temperature-dependant resistor ($R_T$) and the frequency of the switch (T) are fed to a computer.

**6.** A temperature-measuring device according to any one of Claims 1 to 5, characterised in that the frequency has the keying ratio 1: 1.

**7.** A temperature-measuring device according to any one of Claims 1 to 5, characterised in that the frequency has a variable, controllable keying ratio.

8. A temperature-measuring device according to any one of Claims 1 to 5 and 7, characterised in that the keying ratio is variable in dependence upon the voltage ($U_G$).

9. A temperature-measuring device according to any one of Claims 1 to 5, 7 and 8, characterised in that a comparator (K) is connected in series after the low pass filter ($R_C$, C).

10. A temperature-measuring device according to claim 9, characterised in that the voltage ($U_G$) is applied to a first input (1) of the comparator (K) and a delta voltage is applied to a second input (2) of the comparator (K), and that the output signal from the comparator (K) produces the output voltage ($U_{GK}$) of the temperature-measuring device, which voltage simultaneously actuates the transistor (T) - used as a switch - through a series resistor ($R_{V3}$).

11. A temperature-measuring device according to claim 10, characterised in that the delta voltage oscillates between O and $U_B$ voltage values.

**Revendications**

1. Dispositif de mesure de température pour détecter les variations importantes de températures, notamment pour détecter les températures d'un moteur à combustion interne, dispositif comprenant une thermistance ($R_T$) reliée par une résistance intermédiaire ($R_V$) à une source de tension, la chute de tension ($U_G$) mesurée sur la thermistance ($R_T$) étant une mesure de la température, dispositif caractérisé en ce que la résistance intermédiaire ($R_V$) est commutée à une fréquence prédéterminée entre une valeur fortement ohmique et une valeur faiblement ohmique.

2. Dispositif de mesure de température selon la revendication 1, caractérisé en ce qu'à la place de la résistance intermédiaire ($R_V$), il comporte en série avec la thermistance ($R_T$), le montage en parallèle formé d'une résistance intermédiaire fortement ohmique ($R_{V2}$) et dans la branche (Z) de la résistance intermédiaire faiblement ohmique ($R_{V1}$) il est prévu un interrupteur (T) fermé et ouvert à une fréquence prédéterminée.

3. Dispositif de mesure de température selon la revendication 2, caractérisé en ce que l'interrupteur est un transistor (T).

4. Dispositif de mesure de température selon l'une des revendications 1 à 3, caractérisé en ce que la tension ($U_G$) aux bornes de la thermistance ($R_T$) est reçue par l'intermédiaire d'un filtre passe-bas ($R_C$, C).

5. Dispositif de mesure de température selon l'une des revendications 1 à 4, caractérisé en ce que la tension disponible sur la thermistance ($R_T$) et la fréquence de l'interrupteur (T) sont des signaux transmis à un calculateur.

6. Dispositif de mesure de température selon l'une des revendications 1 à 5, caractérisé en ce que la fréquence correspond à un rapport de travail égal à 1.

7. Dispositif de mesure de température selon l'une des revendications 1 à 5, caractérisé en ce que la fréquence présente un rapport de travail variable, commandé.

8. Dispositif de mesure de température selon l'une des revendications 1 à 5 et 7, caractérisé en ce que le rapport de travail peut être modifié en fonction de la tension ($V_G$).

9. Dispositif de mesure de température selon l'une des revendications 1 à 5 et 7 et 8, caractérisé en ce que le filtre passe-bas ($R_C$, C) est suivi d'un comparateur (K).

10. Dispositif de mesure de température selon la revendication 9, caractérisé en ce que la tension ($U_G$) s'applique à une première entrée (1) du comparateur (K) et en ce qu'une tension en triangle s'applique à une deuxième entrée (2) du comparateur (K) et en ce que le signal de sortie du comparateur (K) forme la tension de sortie ($U_{GK}$) du dispositif de mesure de température qui, en même temps, commande par l'intermédiaire d'une résistance située en amont ($R_{V3}$) le transistor (T) installé comme commutateur.

11. Dispositif de mesure de température selon la revendication 10, caractérisé en ce que la tension en triangle oscille entre les valeurs de tension (O) et ($U_B$).

Fig.1

Fig.1a

Fig. 2

Fig. 2a

$U_G$/V

5V

Z

T

$R_{V2}$

$R_{V1}$

$R_c$

$R_T$

C

$U_G$

f = 50 HZ

V/°C

-60  -40  -20  0  20  40  60  80  100  120  140  160  180  200

EP 0 203 350 B1

FIG. 3

FIG. 3a

EP 0 203 350 B1